# EUROPÄISCHE PATENTANMELDUNG

(11) **EP 1 993 008 A1**
(43) Veröffentlichungstag der Anmeldung: **19.11.2008**
(21) Anmeldenummer: 07009961.9
(22) Anmeldetag: 18.05.2007
(51) Int. Cl.: G05B 19/042, G06F 1/26

(54) **Verfahren zum Betreiben eines modular aufgebauten Systems, insbesondere eines Prozess-Automatisierungssystems**

(71) Anmelder: SIEMENS AKTIENGESELLSCHAFT, 80333 München (DE)
(72) Erfinder: Metzler, Matthias, 76229 Karlsruhe (DE)

(57) **Zusammenfassung**

Die Erfindung betrifft ein Verfahren zum Betreiben eines modular aufgebauten und im Betrieb durch Zufügen von elektrische Energie verbrauchenden Modulen erweiterbaren Systems, insbesondere eines Prozess-Automatisierungssystems, wobei das System eine Stromversorgung aufweist, die die anderen Module des Systems mit elektrischer Energie versergt, wobei vor dem Zufügen eines weiteren, elektrische Energie verbrauchenden Moduls mindestens ein Signal erzeugt und angezeigt wird, aus dem die Höhe der aktuellen elektrischen Leistung erkenn- oder ableitbar ist, die die Stromversorgung unter Berücksichtigung der bereits zugefügten Module dem weiteren zuzufügenden Modul noch zur Verfügung stellen kann - Restleistung - und/oder die Höhe der Leistung, die die Stromversorgung den bereits zugefügten Modulen aktuell zur Verfügung stellt, und/oder aus dem erkenn- oder ableitbar ist, ob das zuzufügende Modul ohne Überlastung der Stromversorgung zufügbar ist.

## Beschreibung

Die vorliegende Erfindung betrifft ein Verfahren zum Betreiben eines modular aufgebauten und im Betrieb durch Zufügen, insbesondere Zustecken, von elektrische Energie verbrauchenden Modulen erweiterbaren Systems, insbesondere eines Prozess-Automatisierungssystems, wobei das System eine Stromversorgung aufweist, die die anderen Module des Systems mit elektrischer Energie versorgt.

Prozess-Automatisierungssysteme sind häufig modular aufgebaut, d. h., das Gesamtsystem setzt sich aus einzelnen Modulen, nämlich aus Bauteilen oder aus Baugruppen aus Bauteilen zusammen. Verschiedene Systeme sind dabei auch im Betrieb erweiterbar, so dass Module zugefügt, insbesondere in dafür vorgesehene Steckplätze gesteckt werden können, ohne dass das Gesamtsystem ausgeschaltet oder heruntergefahren werden muss. Ein derartiges Ausschalten des Systems wäre gerade im Bereich der Prozessautomatisierung und insbesondere im Bereich der Anlagensteuerung sehr problematisch, da derartige Ausfallzeiten naturgemäß unmittelbar zu Produktionsstillständen führen.

Bei der Erweiterung von derartigen modular aufgebauten Systemen im Betrieb existieren verschiedene Schwierigkeiten. Besonders problematisch ist der so genannte Überlast-Fall: Abhängig von der Leistungsaufnahme des Moduls, das zugefügt werden soll, reicht die Leistung der Stromversorgung des Systems unter Berücksichtigung der bereits zugefügten Module möglicherweise nicht mehr aus, um die Versorgung sämtlicher Module einschließlich des neu hinzugefügten Moduls aufrecht erhalten zu können. Wenn das Modul dennoch zugefügt wird, kann dies zu einer Überlastung der Stromversorgung und mithin zu einem Zusammenbruch derselben führen. In Konsequenz fällt das gesamte System aus. Dieser Überlast-Fall wird häufig unmittelbar detektiert, sobald das neu zuzufügende Modul zugefügt worden ist.

Allerdings besteht in der Praxis auch die Gefahr, dass derartige Überlast-Fälle erst geraume Zeit nach dem Zufügen auftreten. Ursache ist dann ein temperaturabhängiges Überlastverhalten der Stromversorgung. Bei einer niedrigen Außentemperatur wird von der Stromversorgung beispielsweise dauerhaft eine höhere Ausgangsleistung toleriert als bei einer höheren Temperatur. Das System kann in diesem Fall nach dem Zufügen eines Moduls bei niedriger Außentemperatur in einen zunächst tolerierten Überlastbereich gehen, der erst dann zum Abschalten bzw. zum Zusammenbrechen des Systems führt, wenn die Außentemperatur ansteigt. Dies kann im Einzelfall Stunden, aber auch erst Tage oder Wochen nach dem Zufügen des Moduls geschehen.

Um solche Überlast-Fälle beim Erweitern der eingangs genannten Systeme zu verhindern, sind im Stand der Technik verschiedene Maßnahmen bekannt.

Beispielsweise wird sicherheitshalber eine Stromversorgung eingesetzt, die in Relation zu dem tatsächlichen Bedarf deutlich überdimensioniert ist. Die Überdimensionierung der Stromversorgung soll verhindern, dass beim Zufügen weiterer Module die für die zuzufügenden Module verbleibende Restleistung zu gering ist. Nachteilig bei dieser Vorgehensweise ist, dass diese Überdimensionierung der Stromversorgung zu erheblichen, vermeidbaren Zusatzkosten führt. Weiter nehmen Stromversorgungen naturgemäß umso mehr Raum in Anspruch, umso höher deren Leistung ist.

Schließlich ist bekannt, die einzelnen zufügbaren Module insbesondere systemseitig auf einen maximalen Leistungsbedarf zu begrenzen sowie systemseitig die Anzahl zufügbarer Module zu begrenzen. Die Stromversorgung ist in diesem Fall auf den unter diesen Bedingungen maximalen Gesamtleistungsbedarf ausgelegt. Mit anderen Worten ist die Stromversorgung derart dimensioniert, dass diese unter Berücksichtigung des maximalen Leistungsbedarfs der einzelnen Module auch dann eine ausreichende Leistung zur Verfügung stellt, wenn dem System die maximal mögliche Anzahl an Modulen zugefügt wird.

Nachteilig ist auch bei dieser Lösung, dass die Stromversorgung für eine Vielzahl der Fälle, beispielsweise wenn nicht sämtliche Modulsteckplätze des Systems belegt sind, überdimensioniert ist. Es wird somit ebenfalls eine erhebliche Mehrleistung zur Verfügung gestellt, was zu hohen Kosten führt.

In einer Alternative zu dieser Vorgehensweise wird die Stromversorgung nicht auf die maximale notwendige Gesamtleistung ausgelegt, sondern nur auf eine Zwischenleistung, die für die meisten Anwendungen ausreicht. Bei dieser Lösung wiederum sind Ausfälle des Systems möglich, wenn ausnahmsweise abweichend von dem als normal definierten Anwendungsfall mehr Module zugefügt werden, also eine höhere Gesamtleistung notwendig ist, als die Stromversorgung liefern kann.

Ausgehend von diesem Stand der Technik ist es Aufgabe der vorliegenden Erfindung, ein Verfahren zum Betreiben eines Systems der eingangs genannten Art anzugeben, mit dem das Risiko von Überlast-Fällen beim Zufügen von Modulen und/oder eine Überdimensionierung der Stromversorgung des Systems verringert oder vermieden wird.

Diese Aufgabe wird gelöst durch ein Verfahren der eingangs genannten Art, das die Merkmale des Anspruches 1 aufweist.

Danach wird vor dem Zufügen eines weiteren, elektrische Energie verbrauchenden Moduls mindestens ein Signal erzeugt und angezeigt, aus dem die Höhe der aktuellen elektrischen Leistung erkenn- oder ableitbar ist, die die Stromversorgung unter Berücksichtigung der bereits zugefügten Module dem weiteren zuzufügenden Modul noch zur Verfügung stellen kann - Restleistung - und/oder die Höhe der Leistung, die die Stromversorgung den bereits zugefügten Modulen aktuell zur Verfügung stellt und/oder aus dem erkenn- oder ableitbar ist, ob das zuzufügende Modul ohne Überlastung der Stromversorgung zufügbar ist.

Das grundlegende erfindungsgemäße Konzept besteht demnach darin, den Anwender, der das modular aufgebaute System im Betrieb desselben erweitern soll, zu unterstützen und insbesondere darauf hinzuweisen, falls die Gefahr eines Überlast-Falles droht, also einer Situation, in der die Gefahr eines Ausfalls der Stromversorgung des Systems aufgrund eines zu großen Leistungsbedarfs der zugefügten bzw. noch zuzufügenden Module besteht. Durch die Unterstützung des Bedieners beim Erweitern des Systems wird das Risiko deutlich verringert, dass dem System Module zugefügt werden, die eine Überlastung der Stromversorgung verursachen. Aus diesem Grund kann weitgehend auf eine Überdimensionierung der Stromversorgung verzichtet werden.

Die Erfindung betrifft zwar vorzugsweise Prozess-Automatisierungssysteme, grundsätzlich können aber sämtliche im Betrieb erweiterbaren, modular aufgebauten Systeme mit dem erfindungsgemäßen Verfahren betrieben werden, die über eine Stromversorgung verfügen, die ein oder mehrere Module mit elektrischer Energie versorgt. Beispielsweise können etwa gängige Personal- oder Industrie-Computer mit dem erfindungsgemäßen Verfahren betrieben werden.

Als elektrische Energie verbrauchende Module eines derartigen Systems kommen verschiedenste Bauteile oder Baugruppen aus Bauteilen in Betracht, beispielsweise CPU-Baugruppen, Peripherie-Baugruppen, Kommunikations-Baugruppen oder dergleichen.

Im Rahmen der Anmeldung wird auf die elektrische Leistung abgestellt, die als Kennwert zur Beurteilung dienen soll, ob ein weiteres, elektrische Energie verbrauchendes Modul dem System hinzufügbar, also zufügbar ist. Wie der Fachmann erkennt, sind allerdings naturgemäß auch andere mit der elektrischen Leistung der Stromversorgung bzw. der Module mittelbar oder unmittelbar im Zusammenhang stehende und/oder davon ableitbare Kenngrößen verwendbar, aus denen ein Überlast-Fall der Stromversorgung erkenn- oder ableitbar ist.

Dem für die Erweiterung des Systems verantwortlichen Bediener werden demnach ein oder mehrere Signale angezeigt, aus denen er erkennen oder ableiten kann, ob das Zufügen des dafür vorgesehenen Moduls zu einer Überlastung der Stromversorgung führen kann.

Unter dem Begriff "Zufügen" wird im Rahmen der Anmeldung verstanden, ein entsprechendes, elektrische Energie verbrauchendes Modul mit dem System funktional wirkzuverbinden, so dass das Modul ein oder mehrere der diesem zugedachten Funktionen im System erfüllen kann. Insbesondere wird das Modul dabei derart mit dem System wirkverbunden, dass die Stromversorgung des Systems dem Modul elektrische Energie zuführen kann. Insbesondere bei Prozess-Automatisierungssystemen werden Module dabei häufig in für die Module vorgesehene Steckplätze gesteckt, vorzugsweise in Steckplätze eines geeigneten Bauteil- bzw. Baugruppenträgers.

Gemäß einer erfindungsgemäßen Alternative wird dem Bediener ein Signal angezeigt, aus dem er die Höhe, d. h. den Wert der aktuellen elektrischen Leistung, erkennen oder ableiten kann, die die Stromversorgung dem zuzufügenden Modul zur Verfügung stellen kann. Im einfachsten Fall wird dem Bediener etwa mittels einer geeigneten numerischen Anzeige direkt die Restleistung der Stromversorgung angezeigt. Aus der angezeigten Restleistung kann der Bediener ableiten, ob das Zufügen weiterer Module möglich ist. Dazu muss der Bediener nur die (insbesondere maximale) Leistungsaufnahme des zuzufügenden Moduls kennen. Grundsätzlich ist es auch möglich, komplementär die Höhe bzw. den Wert derjenigen Leistung anzuzeigen, die die Stromversorgung den bereits zugefügten Modulen aktuell zur Verfügung stellt. In diesem Fall muss der Bediener neben der (insbesondere maximalen) Leistungsaufnahme des zuzufügenden Moduls auch die Gesamtleistung der Stromversorgung kennen, um die aktuelle Restleistung ermitteln zu können, die die Stromversorgung den zuzufügenden Modulen noch zur Verfügung stellen kann.

In einer besonderen Ausführungsform der Erfindung sind insbesondere systemseitig nur Module zufügbar, die jeweils identische vorbestimmte Leistungsaufnahmewerte aufweisen oder die zumindest nur Leistungsaufnahmewerte aufweisen, die kleiner oder gleich einem vorbestimmten, insbesondere in einem Speicher hinterlegten Leistungsaufnahmegrenzwert sind. Beispielsweise kann das System so ausgelegt sein, dass ausschließlich Module mit einem (insbesondere maximalen) Leistungsaufnahmewert von 10 Watt zufügbar sind oder die zumindest (insbesondere maximale) Leistungsaufnahmewerte aufweisen, die kleiner sind als 10 Watt oder gleich 10 Watt sind.

In diesem Fall kann eine dem System zugeordnete Rechen- und/oder Steuereinrichtung aus dem vorbestimmten Leistungsaufnahmegrenzwert, der die Obergrenze der einzelnen Leistungsaufnahmewerte der Module bildet, sowie aus dem aktuellen Wert der Restleistung der Stromversorgung unter Berücksichtigung der bereits zugefügten Module eine maximale Anzahl zufügbarer Module ermitteln, deren jeweilige Leistungsaufnahmewerte kleiner oder gleich dem vorbestimmten Leistungsaufnahmegrenzwert sind. Wenn sämtliche Module identische Leistungsaufnahmewerte aufweisen, kann der Leistungsaufnahmewert dem Leistungsaufnahmegrenzwert entsprechen. Erfindungsgemäß soll die ermittelte maximale Anzahl Module zufügbar sein, ohne dass nach dem Zufügen ein vorbestimmter, vorzugsweise in einem Speicher hinterlegter Überlast-Leistungsgrenzwert erreicht oder überschritten wird, dessen Erreichen oder dessen Überschreiten einen Überlast-Fall der Stromversorgung zur Folge haben könnte. Die maximale Anzahl kann alternativ zu der Ermittlung durch die Rechen- und/oder Steuereinrichtung auch als vorbestimmter Wert aus einem der Rechen- und/oder Steuereinrichtung zugeordneten Speicher entnommen werden.

Es wird erfindungsgemäß bei dieser Ausführungsform demnach ein Überlast-Leistungsgrenzwert der Stromversorgung definiert. Dieser Grenzwert wird üblicherweise abhängig sein von der Nennleistung der Stromversorgung. Weiter steht dem System bzw. der Rechen- und/oder Steuereinrichtung die Information zur Verfügung, dass der (insbesondere maximale) Leistungsaufnahmewert jedes zuzufügenden Moduls kleiner oder gleich dem vorbestimmten Leistungsaufnahmegrenzwert ist. Im Spezialfall sind sämtliche (insbesondere maximalen) Leistungsaufnahmewerte der Module identisch.

Schließlich ist die Restleistung ermittelbar bzw. vorgegeben, die die Stromversorgung den zuzufügenden Modulen zur Verfügung stellen kann. Der Wert der Restleistung kann über eine geeignete Restleistungs-Erfassungseinrichtung, insbesondere geeignete Messgeräte, Sensoren oder dergleichen, ermittelt werden. Aus diesen Informationen kann die Rechen- und/oder Steuereinrichtung die maximale Anzahl von Modulen - mit insbesondere jeweils identischen vorbestimmten Leistungsaufnahmewerten - errechnen, die dem System hinzugefügt werden kann, ohne dass der oben definierte Überlast-Fall eintritt.

Über eine Anzeige, insbesondere eine mehrstufige Anzeige, können dem Bediener, der die Module zufügen soll, die ermittelten oder aus dem Speicher entnommenen Werte angezeigt werden. Beispielsweise kann ein Signal angezeigt werden, sobald die maximale Anzahl zufügbarer Module 1 ist. Der Wert 1 bedeutet, dass nur noch ein weiteres Modul mit der entsprechenden Leistungsaufnahme zugefügt werden kann, ohne dass der Überlast-Leistungsgrenzwert erreicht oder überschritten wird. Bei einer Ampel-Anzeige könnte beispielsweise ein zuvor grünes Licht ausgeschaltet werden und ein Licht in der Farbe Gelb eingeschaltet werden.
Ein weiteres, von dem ersten Signal unterscheidbares Signal kann erzeugt und angezeigt werden, wenn die maximale Anzahl zufügbarer Module 0 ist. Der Wert 0 gibt an, dass kein weiteres entsprechendes Modul zugefügt werden darf, da ansonsten der vorbestimmte Überlast-Leistungsgrenzwert der Stromversorgung erreicht oder überschritten wird. Bei der vorgenannten Ampel-Anzeige könnte das Licht von Gelb auf Rot wechseln.

Es ist natürlich auch denkbar, die so errechnete maximale Anzahl zufügbarer Module mittels einer numerischen Anzeige oder einer (Klar-)Text-Anzeige anzuzeigen, bevorzugt, wenn die maximale Anzahl zufügbarer Module kleiner oder gleich einem vorbestimmten Grenzwert ist. Beispielsweise könnte daran gedacht werden, die maximale Anzahl zufügbarer Module schon anzuzeigen, wenn etwa noch fünf Module zufügbar sind, ohne dass der definierte Überlast-Fall eintritt. Grundsätzlich ist es natürlich auch denkbar, die maximale Anzahl zufügbarer Module unabhängig von dem Wert der maximalen Anzahl während des gesamten Betriebs des Systems kontinuierlich oder in gewissen Zeitabständen anzuzeigen.

In einer weiteren Ausführungsform der vorliegenden Erfindung wird davon ausgegangen, dass verschiedene Klassen von Modulen eingesetzt werden. Die jeweils einer Modulklasse zugeordneten Module weisen dabei jeweils (insbesondere maximale) Leistungsaufnahmewerte auf, die größer oder gleich sind einem vorbestimmten klassenabhängigen, unteren Leistungsgrenzwert und die kleiner sind oder gleich sind einem vorbestimmten klassenabhängigen, oberen Leistungsaufnahmegrenzwert. Sowohl der obere als auch der untere Leistungsaufnahmegrenzwert sind vorzugsweise in einem Speicher hinterlegt. Unter dieser Voraussetzung ist vorgesehen, für jede Leistungsaufnahmeklasse die maximale Anzahl von Modulen dieser Klasse zu ermitteln, die dem System zugefügt werden kann, ohne dass der Überlast-Leistungsgrenzwert der Stromversorgung erreicht wird oder überschritten.

Die durch die unteren und oberen, klassenabhängigen Leistungsaufnahmegrenzwerte gebildeten Klassen bzw. Intervalle können beispielsweise sein: 0 Watt - 1 Watt, 1 Watt - 2 Watt, 3 Watt - 4 Watt usw.

Dementsprechend kann die Rechen- und/oder Steuereinrichtung für die verschiedenen Klassen von Modulen unterschiedlicher, insbesondere maximaler Leistungsaufnahmewerte jeweils eine maximale Anzahl zufügbarer Module ermitteln oder aus einem Speicher entnehmen, die zufügbar ist, ohne dass der Überlast-Leistungsgrenzwert erreicht oder überschritten wird, dessen Erreichen oder dessen Überschreiten einen Überlast-Fall der stromversorgung zur Folge haben kann, wobei die klassenabhängige, maximale Anzahl von Modulen ermittelbar ist aus den jeder Klasse zugeordneten, oberen Leistungsaufnahmegrenzwerten, die jeweils die Obergrenze bilden für sämtliche zufügbaren Module der entsprechenden Klasse, und aus dem aktuellen Wert der Restleistung der Stromversorgung unter Berücksichtigung der bereits zugefügten Module.

In einer weiteren Ausführungsform kann vorgesehen sein, für jede dieser Leistungsaufnahmeklassen ein Signal zu erzeugen und anzuzeigen, wenn die für die jeweilige Leistungsaufnahmeklasse ermittelte maximale Anzahl zufügbarer Module dieser Klasse 1 ist, und ein weiteres, von dem ersten Signal unterscheidbares Signal zu erzeugen, wenn die maximale Anzahl zufügbarer Module dieser Klasse 0 ist.

Demnach werden für jede Leistungsklasse Signale angezeigt, wie sie - weiter oben dargestellt - für nur eine Klasse angezeigt werden. Wenn der Bediener daher beispielsweise ein Modul einer bestimmten Leistungsaufnahmeklasse dem System hinzufügen möchte, kann er einer entsprechenden Anzeige entnehmen, ob Module dieser Leistungsaufnahmeklasse zufügbar sind oder ob für diese Leistungsaufnahmeklasse der entsprechende Überlast-Leistungsgrenzwert erreicht oder überschritten würde, wenn ein weiteres Modul zugefügt würde.

Es ist beispielsweise denkbar, dass unter Berücksichtigung der Restleistung der Stromversorgung ein Modul einer Leistungsaufnahmeklasse mit geringerem Leistungswert, etwa 0 - 1 Watt, zufügbar ist, ohne den Überlast-Fall zu provozieren. Für ein Modul einer höheren Leistungsaufnahmeklasse, beispielsweise 4 - 5 Watt, gilt dies möglicherweise nicht, da bei Zufügen desselben der Überlast-Leistungsgrenzwert möglicherweise erreicht oder überschritten wäre.

In einer weiteren Ausführungsform der vorliegenden Erfindung erfasst das System mittels einer Erfassungseinrichtung dem zuzufügenden Modul zugeordnete Informationen, insbesondere drahtlos, vorzugsweise automatisch. Dabei sind die dem zuzufügenden Modul zugeordneten Informationen repräsentativ für einen vorbestimmten Leistungsaufnahmewert des jeweiligen Moduls, vorzugsweise für dessen maximalen Leistungsaufnahmewert. Mindestens kann anhand der zugeordneten Informationen der vorbestimmte Leistungsaufnahmewert des Moduls ermittelt werden.

An oder in dem zuzufügenden Modul, insbesondere auf einem speziellen Informationsträger, können demnach Informationen gespeichert sein, aus denen sich der Leistungsaufnahmewert des Moduls ergibt bzw. aus denen dieser Leistungsaufnahmewert mittelbar oder unmittelbar ermittelt werden kann.

Die Erfassungseinrichtung des Systems liest diese Informationen bevorzugt automatisch aus. Beispielsweise kann dies dadurch geschehen, dass das zuzufügende Modul einen Barcode aufweist, der von einem entsprechenden Barcode-Lesegerät des Systems berührungslos ausgelesen wird. Der Leistungsaufnahmewert des Moduls ist dann als Barcode abgelegt oder zumindest in diesem enthalten. Alternativ kann auch ein RFID-Tag an dem Modul angeordnet sein. Die Erfassungseinrichtung des Systems empfängt die entsprechenden Leistungsaufnahme-Informationen des RFID-Tags etwa automatisch, sobald das Modul an das System angenähert wird. Die Übermittlung der dem Modul zugeordneten Informationen an die Erfassungseinrichtung des Systems erfolgt bevorzugt drahtlos bzw. berührungslos. Alternativ kann die Übermittlung natürlich auch drahtgebunden erfolgen.

In einer weiteren Ausführungsform weist die Erfassungseinrichtung eine Eingabeeinrichtung auf, vorzugsweise eine Tastatur, über die dem System, insbesondere der Rechen- und/oder Steuereinrichtung des Systems, die oben dargestellten Informationen übermittelbar sind, die repräsentativ sind für einen vorbestimmten Leistungsaufnahmewert des jeweiligen Moduls, insbesondere für dessen maximalen Leistungsaufnahmewert, oder mittels derer der vorbestimmte Leistungsaufnahmewert ermittelt werden kann. Ein Bediener kann in diesem Fall beispielsweise den entsprechenden Leistungsaufnahmewert des zuzufügenden Moduls unmittelbar über die Eingabeeinrichtung eingeben. Alternativ oder zusätzlich kann von dem Bediener die Leistungsaufnahmeklasse auswählbar sein, in die das zuzufügende Modul fällt.

In weiterer Ausbildung der Erfindung können die auf die oben beschriebenen Weisen erfassten Informationen zu dem Leistungsaufnahmewert und/oder der Leistungsaufnahmeklasse des spezifischen, zuzufügenden Moduls in der dem System zugeordneten Rechen- und/oder Steuereinrichtung weiterverarbeitet werden.

Bevorzugt werden der Leistungsaufnahmewert und/oder die Leistungsaufnahmeklasse des Moduls in der Rechen- und/oder Steuereinrichtung verglichen mit der Restleistung, die die Stromversorgung unter Berücksichtigung der bereits zugefügten Module dem zuzufügenden Modul zur Verfügung stellen kann.

Über eine entsprechende Anzeige, etwa eine optische oder akustische Anzeige, können das unmittelbare Ergebnis des Vergleichs oder daraus abgeleitete Informationen angezeigt werden. Insbesondere kann die maximale Anzahl an Modulen des Leistungsaufnahmewertes und/oder der Leistungsaufnahmeklasse angezeigt werden, die noch zufügbar ist, und/oder eine andere Information, aus der erkenn- oder ableitbar ist, ob das zuzufügende Modul zufügbar ist, ohne dass die Gefahr besteht, dadurch einen Überlast-Fall der Stromversorgung zu provozieren.

Gemäß einer weiteren Ausführungsform werden die dem zuzufügenden Modul zugeordneten Informationen zu dem Leistungsaufnahmewert des Moduls zunächst automatisch erfasst und der Rechen- und/oder Steuereinrichtung übermittelt. Anschließend wählt die Rechen- und/oder Steuereinrichtung automatisch anhand des Leistungsaufnahmewertes des zuzufügenden Moduls die Leistungsaufnahmeklasse aus, in die das zuzusteckende Modul fällt. Schließlich wird die maximale Anzahl von Modulen mittels einer geeigneten Anzeige des Systems automatisch angezeigt, die von Modulen dieser Leistungsaufnahmeklasse zufügbar ist, ohne dass der vorbestimmte Überlast-Leistungsgrenzwert erreicht oder überschritten wird, dessen Erreichen oder dessen Überschreiten einen Überlast-Fall der Stromversorgung zur Folge haben kann.

Wie der Fachmann des Standes der Technik erkennt, sind vielfältige Ausführungsformen der Erfindung denkbar, ohne von dem Grundkonzept derselben abzuweichen. Die Umsetzung der in der vorliegenden Anmeldung beschriebenen Verfahren ist mit entsprechenden Computer- und/oder Steuereinrichtungen, insbesondere mit geeigneten Ablaufprogrammen, sowie entsprechenden Anzeigeeinrichtungen problemlos möglich.

Weitere Merkmale der vorliegenden Erfindung ergeben sich aus den beigefügten Unteransprüchen.

## Patentansprüche

1. Verfahren zum Betreiben eines modular aufgebauten und im Betrieb durch Zufügen, vorzugsweise Zustecken, von elektrische Energie verbrauchenden Modulen erweiterbaren Systems, insbesondere eines Prozess-Automatisierungssystems, wobei das System eine Stromversorgung aufweist, die die elektrische Energie verbrauchenden Module des Systems mit elektrischer Energie versorgt, **dadurch gekennzeichnet, dass** vor dem Zufügen eines weiteren, elektrische Energie verbrauchenden Moduls mindestens ein Signal erzeugt und angezeigt wird, aus dem die Höhe der aktuellen elektrischen Leistung erkenn- oder ableitbar ist, die die Stromversorgung unter Berücksichtigung der bereits zugefügten Module dem weiteren zuzufügenden Modul noch zur Verfügung stellen kann - Restleistung - und/oder die Höhe der Leistung, die die Stromversorgung den bereits zugefügten Modulen aktuell zur Verfügung stellt, und/oder aus dem erkenn- oder ableitbar ist, ob das zuzufügende Modul ohne Überlastung der Stromversorgung zufügbar ist.

2. Verfahren gemäß Anspruch 1, **dadurch gekennzeichnet, dass** eine dem System zugeordnete Rechen- und/oder Steuereinrichtung eine maximale Anzahl zufügbarer Module ermittelt und/oder einem Speicher entnimmt, die zufügbar ist, ohne dass ein vorbestimmter Überlast-Leistungsgrenzwert erreicht oder überschritten wird, dessen Erreichen oder dessen Überschreiten einen Überlast-Fall der Stromversorgung zur Folge haben kann, wobei die maximale Anzahl ermittelbar ist aus einem Leistungsaufnahmegrenzwert, der die Obergrenze bildet für sämtliche zufügbaren Module, und aus dem aktuellen Wert der Restleistung der Stromversorgung unter Berücksichtigung der bereits zugefügten Module.

3. Verfahren gemäß Anspruch 2, **dadurch gekennzeichnet, dass** der vorbestimmte Überlast-Leistungsgrenzwert abhängig ist von der Nennleistung der Stromversorgung und insbesondere größer ist als die Nennleistung.

4. Verfahren gemäß Anspruch 2 oder 3, **dadurch gekennzeichnet, dass**, insbesondere einem Bediener, ein erstes Signal angezeigt wird, wenn die maximale Anzahl zufügbarer Module 1 ist, und dass ein weiteres, von dem ersten Signal unterscheidbares Signal angezeigt wird, wenn die maximale Anzahl zufügbarer Module 0 ist.

5. Verfahren gemäß Anspruch 2, 3 oder 4, **dadurch gekennzeichnet, dass**, insbesondere einem Bediener, die maximale Anzahl zufügbarer Module mittels einer numerischen Anzeige oder einer Text-Anzeige angezeigt wird, bevorzugt, wenn die maximale Anzahl zufügbarer Module kleiner oder gleich ist einem vorbestimmten Grenzwert.

6. Verfahren gemäß Anspruch 3, 4 oder 5, **dadurch gekennzeichnet, dass** ein von dem ersten und dem zweiten Signal unterscheidbares, drittes Signal angezeigt wird, wenn die Gesamt-Leistungsaufnahme der bereits zugefügten Module gleich ist oder größer ist als der Überlast-Leistungsgrenzwert.

7. Verfahren gemäß einem oder mehreren der vorhergehenden Ansprüche, **dadurch gekennzeichnet, dass** das oder die Signale mittels einer mehrstufigen optischen Anzeige angezeigt werden, insbesondere mittels einer mehrstufigen LED-Anzeige, wobei die mehrstufige, optische Anzeige vorteilhafterweise an der Stromversorgung des Systems angeordnet ist und/oder an einer CPU des Systems.

8. Verfahren gemäß einem oder mehreren der vorhergehenden Ansprüche, **dadurch gekennzeichnet, dass** eine dem System zugeordnete Rechen- und/oder Steuereinrichtung für verschiedene Klassen von Modulen unterschiedlicher, insbesondere maximaler Leistungsaufnahmewerte jeweils eine maximale Anzahl zufügbarer Module ermittelt oder einem Speicher entnimmt, die zufügbar ist, ohne dass ein vorbestimmter Überlast-Leistungsgrenzwert erreicht oder überschritten wird, dessen Erreichen oder dessen Überschreiten einen Überlast-Fall der Stromversorgung zur Folge haben kann, wobei die klassenabhängige, maximale Anzahl ermittelbar ist aus jeder Klasse zugeordneten, oberen Leistungsaufnahmegrenzwerten, die jeweils die Obergrenze bilden für sämtliche zufügbaren Module der entsprechenden Klasse, und aus dem aktuellen Wert der Restleistung der Stromversorgung unter Berücksichtigung der bereits zugefügten Module.

9. Verfahren gemäß Anspruch 8, **dadurch gekennzeichnet, dass**, insbesondere einem Bediener, für jede Leistungsaufnahmeklasse ein erstes Signal angezeigt wird, wenn die für die jeweilige Leistungsaufnahmeklasse ermittelte maximale Anzahl zufügbarer Module dieser Klasse 1 ist, und dass ein weiteres, von dem ersten Signal unterscheidbares Signal erzeugt wird, wenn die maximale Anzahl zufügbarer Module dieser Klasse 0 ist.

10. Verfahren gemäß Anspruch 8 oder 9, **dadurch gekennzeichnet, dass** ein von dem ersten und dem zweiten Signal unterscheidbares, drittes Signal angezeigt wird, wenn die Gesamt-Leistungsaufnahme der bereits zugefügten Module des Systems gleich ist oder größer ist als der Überlast-Leistungsgrenzwert.

11. Verfahren gemäß Anspruch 8, 9 oder 10, **dadurch gekennzeichnet, dass**, insbesondere einem Bediener, die maximale Anzahl zufügbarer Module dieser Klasse mittels einer numerischen Anzeige oder einer Text-Anzeige angezeigt wird, bevorzugt, wenn die maximale Anzahl zufügbarer Module dieser Klasse kleiner ist oder gleich ist einem vorbestimmten Grenzwert.

12. Verfahren gemäß einem oder mehreren der vorhergehenden Ansprüche, **dadurch gekennzeichnet, dass** das System mittels einer Erfassungseinrichtung dem zuzufügenden Modul zugeordnete Informationen, insbesondere drahtlos, vorzugsweise automatisch, erfasst, die repräsentativ sind für einen vorbestimmten Leistungsaufnahmewert des jeweiligen Moduls, insbesondere für dessen maximalen Leistungsaufnahmewert, oder mittels derer der vorbestimmte Leistungsaufnahmewert ermittelt werden kann.

13. Verfahren gemäß Anspruch 12, **dadurch gekennzeichnet, dass** die Erfassungseinrichtung über einen Empfänger verfügt, insbesondere einen Empfänger elektromagnetischer Wellen, über den die dem Modul zugeordneten Informationen drahtlos empfangen werden können.

14. Verfahren gemäß Anspruch 12 oder 13, **dadurch gekennzeichnet, dass** die Erfassungseinrichtung eine Bedieneinrichtung aufweist, vorzugsweise eine Tastatur, über die dem System, insbesondere der Rechen- und/oder Steuereinrichtung des Systems, Informationen übermittelbar sind, die repräsentativ sind für einen vorbestimmten Leistungsaufnahmewert des jeweiligen Moduls, insbesondere für dessen maximalen Leistungsaufnahmewert, oder mittels derer der vorbestimmte Leistungsaufnahmewert ermittelt werden kann.

15. Verfahren gemäß einem oder mehreren der vorhergehenden Ansprüche 12 bis 14, **dadurch gekennzeichnet, dass** die dem zuzufügenden Modul zugeordneten Informationen zu dem Leistungsaufnahmewert des Moduls, insbesondere automatisch, erfasst und der Rechen- und/oder Steuereinrichtung übermittelt werden und dass die Rechen- und/oder Steuereinrichtung anhand des Leistungsaufnahmewertes des zuzufügenden Moduls die Leistungsaufnahmeklasse auswählt, in die das zuzusteckende Modul fällt, und dass mittels einer geeigneten Anzeige des Systems, insbesondere einem Bediener, die maximale Anzahl angezeigt wird, die von Modulen dieser Leistungsaufnahmeklasse zufügbar ist, ohne dass der vorbestimmte Überlast-Leistungsgrenzwert erreicht oder überschritten wird, dessen Erreichen oder dessen Überschreiten einen Überlast-Fall der Stromversorgung zur Folge haben kann.
